(19) **Europäisches Patentamt**
**European Patent Office**
**Office européen des brevets**

(11) **EP 2 128 295 B1**

(12) **EUROPEAN PATENT SPECIFICATION**

(45) Date of publication and mention
of the grant of the patent:
**15.07.2015 Bulletin 2015/29**

(51) Int Cl.:
*C22C 38/06* (2006.01)    *C21D 9/46* (2006.01)
*C23C 2/02* (2006.01)    *C23C 2/06* (2006.01)
*C23C 2/28* (2006.01)    *C22C 38/02* (2006.01)
*C22C 38/04* (2006.01)

(21) Application number: **08722826.8**

(22) Date of filing: **18.03.2008**

(86) International application number:
**PCT/JP2008/055629**

(87) International publication number:
**WO 2008/123267 (16.10.2008 Gazette 2008/42)**

(54) **HIGH-STRENGTH HOT DIP ZINC PLATED STEEL SHEET HAVING EXCELLENT MOLDABILITY, AND METHOD FOR PRODUCTION THEREOF**

HOCHFESTES FEUERVERZINKTES STAHLBLECH MIT HERVORRAGENDER FORMBARKEIT UND HERSTELLUNGSVERFAHREN DAFÜR

TÔLE D'ACIER GALVANISÉ À CHAUD, HAUTE RÉSISTANCE, POSSÉDANT UNE EXCELLENTE APTITUDE AU MOULAGE, ET SON PROCÉDÉ DE PRODUCTION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.03.2007 JP 2007074656**
**31.01.2008 JP 2008020772**

(43) Date of publication of application:
**02.12.2009 Bulletin 2009/49**

(73) Proprietor: **JFE Steel Corporation**
**Tokyo 100-0011 (JP)**

(72) Inventors:
• **NAKAGAITO, Tatsuya**
**Tokyo 100-0011 (JP)**
• **SUZUKI, Yoshitsugu**
**Tokyo 100-0011 (JP)**
• **TAKAGI, Shusaku**
**Tokyo 100-0011 (JP)**
• **MATSUOKA, Saiji**
**Tokyo 100-0011 (JP)**

• **KAWANO, Takashi**
**Tokyo 100-0011 (JP)**
• **SUGIMOTO, Yoshiharu**
**Tokyo 100-0011 (JP)**

(74) Representative: **Stebbing, Timothy Charles**
**Haseltine Lake LLP**
**Lincoln House, 5th Floor**
**300 High Holborn**
**London WC1V 7JH (GB)**

(56) References cited:
EP-A1- 1 096 029      EP-A1- 1 365 037
EP-A2- 1 264 911      WO-A1-2005/017214
WO-A1-2005/047550    JP-A- H0 578 753
JP-A- 2001 192 768    JP-A- 2001 207 235
JP-A- 2004 211 157    JP-A- 2004 339 606
JP-A- 2005 002 404    JP-A- 2005 002 404
JP-A- 2005 163 055    JP-A- 2005 256 089
JP-A- 2005 264 328    JP-A- 2006 283 071
JP-A- 2007 002 276    JP-A- 2007 302 918
US-A1- 2003 129 444

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a high-strength cold-rolled galvanized steel sheet having excellent formability, which is for members used, for example, in automobile and electrical industrial fields.

Background Art

In recent years, in view of global environment conservation, in order to improve fuel efficiency of automobiles and to improve collision safety of automobiles, development has been aggressively carried out to reduce the wall thickness of automobiles by increasing the strength of materials therefor so as to reduce the weight of the automobile body itself and to increase the strength thereof, and hence high tensile strength steel sheets have been increasingly used in automobile applications. Since the high tensile strength steel is inferior in formability to soft steel, a high tensile strength steel sheet having improved formability has been developed through various structure controls. Furthermore, since improvement in corrosion resistance has been strongly requested for recent automobiles, a high tensile steel sheet processed by hot-dip galvanizing has been developed.

As a conventional technique, for example, Patent Document 1 has proposed a high-strength hot-dip plated steel sheet having excellent hole expansion properties, and Patent Documents 2 to 4 have proposed a high-strength hot-dip plated steel sheet having an excellent anti-powdering property and ductility.

Patent Document 5 discloses a high strength galvanized steel sheet having excellent ductility and produced in a continuous galvanizing line.

However, in order to ensure a high strength of TS 590 Mpa or more, according to the techniques described above, it is necessary to add 0.25% or more of Al, and hence there have been problems of alloying cost, degradation in casting properties caused by Al addition, and the like. In addition, in particular, according to the Patent Documents 2 to 4, since retained austenite is contained, although the steel sheet has high elongation properties, cracking may occur in secondary machining, and/or shape fixability of formed parts may be inferior to that of ferrite/martensite steel in some cases.

Non-Patent Document 1 will be described in the column of "Disclosure of the Invention".

Patent Document 1: Japanese Unexamined Patent Application Publication No. 2005-256089
Patent Document 2: Japanese Unexamined Patent Application Publication No. 2005-200690
Patent Document 3: Japanese Unexamined Patent Application Publication No. 2005-200694
Patent Document 4: Japanese Unexamined Patent Application Publication No. 2006-299344
Patent Document 5: EP1096029 A
Non-Patent Document 1: Proceedings of the International Workshop on the Innovative Structural Materials for Infrastructure in 21st Century, p. 189 (Fig. 4)

Disclosure of the Invention

In consideration of the problems described above, an object of the present invention is to obtain a high-strength cold-rolled galvanized steel sheet, which has excellent formability equivalent or superior to that of a conventional high-strength galvanized steel sheet, which is manufactured at a cost equivalent to a conventional high-strength galvanized steel sheet, and which has manufacturing properties equivalent to those thereof, and to obtain a method for manufacturing the above steel sheet. In particular, in steel having a tensile strength of 780 MPa or more, under the condition in which the addition of Al is controlled to a level to be used for general deacidification, a high-strength galvanized steel sheet having excellent workability, in which the product of the tensile strength and the total elongation is 15,000 MPa·% or more and the product of the tensile strength and the hole expansion rate is 45,000 MPa·% or more is obtained, and a method for manufacturing the above steel sheet is obtained. In order to simultaneously achieve weight reduction and high rigidity, the number of automobile body parts having complicated shapes has been increased, and when the product of the tensile strength and the total elongation satisfies 15,000 MPa·% or more and the product of the tensile strength and the hole expansion rate satisfies 45,000 MPa·% or more, by using a high-tensile strength steel sheet, a significantly larger number of parts can be manufactured than that in the past.

The inventors of the present invention first investigated influences of microstructures of various types of steel sheets on the product of the tensile strength and the total elongation and the product of the tensile strength and the hole expansion rate. As a result, the correlation between the distribution of the nano-hardness of the structure in a steel sheet and the product of the tensile strength and the hole expansion rate was observed. That is, it was found that when the standard deviation of the nano-hardness of a part located at one fourth of the sheet thickness, which is the part generally represented as the steel sheet structure at which a phase fraction and/or hardness is measured, is 1.50 GPa or less, the product of the tensile strength and the hole expansion rate is high.

The nano-hardness in this case is the hardness measured by applying a load of 1,000 $\mu$N using TRIBOSCOPE manufactured by Hysitron Inc. In particular, approximately 50 points, approximately 7 lines each including 7 points disposed with pitches of 5 $\mu$m, were measured, and the standard deviation thereof was obtained. The details will be described in examples.

As a method for measuring the hardness of a microstructure, the Vickers hardness is famous. However, the minimum value of a loading weight according to the Vickers hardness measurement is 0.5 gf, and even in the case of hard martensite, the indentation size is 1 to 2 $\mu$m, so that the hardness measurement of a microscopic phase is impossible. Furthermore, since martensite has a layered structure of packet, block, and lath, and bainite also has a layered structure called a sheaf or a sub-unit, as disclosed in the Non-Patent Document 1, layers influencing on the hardness measured by the indentation size are different from each other. For example, an evaluation result obtained using an indentation size of 1 $\mu$m or less and that obtained using an indentation size of 10 $\mu$m or more, which can be measured by a Vickers hardness meter, are different from each other, and the correlation between the mechanical property and the Vickers hardness is not the same as the corelation between the mechanical property and the nano hardness. Under the measurement conditions of the present invention, the length of one side of the indentation was 300 to 800 nm, and it was found that by decreasing the standard deviation of this nano-hardness, the hole expansion rate can be improved.

In addition, it was also found that when martensite and/or retained austenite is reduced while a large amount of Si is added, without using Al, the elongation can be improved while the hole expansion rate is maintained. Although the addition of Si caused degradation in anti-powdering property in the past, also on this point, adhesion sufficient in practical use could be maintained.

(1) A high-strength cold-rolled galvanized steel sheet haying excellent formability, consisting of, as a chemical component of steel on a mass percent basis: 0.05% to 0.3% of C; 0.80% to 2.0% of Si; 0.50% to 3.50% of Mn; 0.003% to 0.100% of P; 0.010% or less of S; 0.010% to 0.06% of Al; 0.007% or less of N; and further optionally comprising at least one of 0.005% to 2.00% of Cr, 0.005% to 2.00% of V, 0.005% to 2.00% of Mo, 0.005% to 2.00% of Ni, and 0.005% to 2.00% of Cu on a mass percent basis, and further optionally comprising at least one of 0.01% to 0.20% of Ti and 0.01% to 0.10% of Nb on a mass percent basis, and further optionally comprising 0.0002% to 0.005% of B on a mass percent basis, and further optionally comprising at least one of 0.001% to 0.005% of Ca and 0.001% to 0.005% of REM on a mass percent basis; and the balance being Fe and inevitable impurities, wherein in the microstructure of the steel sheet, ferrite has an area fraction of 20% or more, tempered martensite, tempered bainite, and bainite have a total area fraction of 10% or more, ferrite, tempered martensite, tempered bainite, and bainite have a total area fraction of 90% or more, and wherein in the microstructure of the steel sheet, the standard deviation of nano-hardness measured at a depth of one forth of the thickness of the steel sheet is 1.50 GPa or less.

(2) The high-strength cold-rolled galvanized steel sheet having excellent formability, according to (1), wherein in the microstructure of the steel sheet, the total area fraction of retained austenite and martensite is 5% or less.

(3) The high-strength cold-rolled galvanized steel sheet having excellent formability according to one of the above (1) to (2), wherein the average solid-solved Si amount and the average solid-solved Mn amount in a base steel surface layer portion, which is in a region from a plating/base steel interface to a depth of 0.5 $\mu$m therefrom, are each 0.5 mass percent or less.

(4) The high-strength galvanized steel sheet having excellent formability, according to one of the above (1) to (2), wherein the high-strength galvanized steel sheet is a high-strength galvanized steel sheet having a plating layer containing 7% to 15% of Fe, and in a base steel surface layer portion, which is in a region from a plating/base steel interface to a depth of 0.5 $\mu$m therefrom, the average solid-solved Si amount is 70% to 90% of a Si amount of an average parent material composition, and the average solid-solved Mn amount is 50% to 90% of an Mn amount of the average parent material composition.

(5) A method for manufacturing a high-strength cold-rolled galvanized steel sheet having excellent formability, wherein after a slab having components described in one of the above (1) to (4) is hot-rolled and cold-rolled, annealing is performed in a continuous galvanizing line having a heating zone of a direct-firing furnace type or a non-oxidizing furnace type, heating is performed in the heating zone at an average heating rate of 10°C/sec or more from 400°C to a heating-zone outlet-side temperature so that the heating-zone outlet-side temperature is 600°C or more; then in a reducing zone, heating is performed at an average heating rate of 0.1 to 10°C/sec to a maximum reaching temperature of 750°C or more and is held for 30 seconds or more; subsequently, cooling is performed from 750°C to 350°C or less at an average cooling rate of 10°C/sec or more; then heating is performed to 350°C to 700°C and is held for 1 second or more; and subsequently, hot-dip galvanizing is performed, or an alloying treatment after the hot-dip galvanizing is further performed, by heating to a temperature of 490 to 550°C.

According to the present invention, since a high-strength galvanized steel sheet which has good manufacturability and high formability or which further has an excellent anti-powdering property can be manufactured at a low cost as compared to that by a conventional technique, the industrial utility value is very high, and in particular, excellent advantages in weight reduction and rust protection of an automobile body can be obtained, so that industrial advantages are significant.

Best Modes for Carrying Out the Invention

Hereinafter, the present invention will be described in detail. First, reasons for limiting a steel sheet microstructure and chemical components of steel will be described. The unit of the element content of a chemical component of steel and the unit of that of a plating layer each indicate "mass percent" and is hereinafter simply represented by "%".

Standard Deviation of Nano-Hardness being 1.50 GPa or less:

When the nano-hardness is measured at approximately 50 points in the vicinity of a position located at approximately one fourth of a sheet thickness, if the standard deviation of the nano-hardness is more than 1.50 GPa, the product of the tensile strength and the hole expansion rate cannot satisfy 45,000 MPa·% or more; hence, it is set to 1.50 GPa or less. It is preferably 1.0 GPa or less. The standard deviation $\sigma$ is obtained from n hardness data x by using equation (1).

$$\sigma = \sqrt{\frac{n\sum x^2 - \left(\sum x\right)^2}{n(n-1)}}$$

$$(1)$$

C: 0.05% to 0.30%

Since C is an element which stabilizes austenite and which allows hard phases other than ferrite, that is, martensite, bainite, retained austenite, tempered martensite, and tempered bainite, to be easily generated, C is an essential element to improve a TS-elongation balance (the product of the tensile strength and the elongation) by complexing the microstructure as well as to increase the steel strength. When the C amount is less than 0.05%, even when the manufacturing conditions are optimized, it is difficult to ensure the phases other than ferrite, and the product of the tensile strength and the elongation is degraded. On the other hand, when the C amount is more than 0.30%, a welded part and a thermally influenced part are considerably hardened, and mechanical properties of the welded part are degraded. From the points described above, the C amount is set in the range of 0.05% to 0.30%. Preferably, the amount is in the range of 0.08% to 0.15%.

Si: 0.80% to 2.0%

Si is an effective element to strengthen steel. In particular, Si has an effect of decreasing the standard deviation of nano-hardness in steel having a complex microstructure. Although details have not been understood, when it is intended to obtain a steel sheet having the same tensile strength, it is estimated that Si does not allow the nano-hardness of a hard phase to easily increase. In addition, although it is an element which generates ferrite, since Si promotes the segregation of C in austenite, it allows hard phases other than ferrite, that is, martensite, bainite, retained austenite, tempered martensite, and tempered bainite, to be easily generated, and by obtaining a complex structure of ferrite and hard phases, the product of the tensile strength and the elongation of high-strength steel is improved. In addition, solid-solved Si in ferrite also has an effect of improving the product of the tensile strength and the total elongation and the hole expansion properties of a steel sheet. The effect described above can be obtained by addition in an amount of 0.80% or more. However, when the Si amount is more than 2.0%, degradation in formability and toughness caused by an increase in solid-solved amount in ferrite occurs, and/or by generation of red scale and the like, degradation in surface properties and that in plating adhesion/anti-powdering property of hot-dip plating occur. Hence, the Si amount is set in the range of 0.80% to 2.0%. Preferably, the amount is in the range of 0.80% to 1.5%.

Mn: 0.50% to 3.50%

Mn is an effective element to strengthen steel. In addition, Mn is an element to stabilize austenite and is a necessary element to improve the product of the tensile strength and the elongation as well as to increase the volumes of phases other than ferrite and to ensure the strength. This effect can be obtained by addition of Mn in an amount of 0.50% or more. On the other hand, when Mn in an amount of more than 3.50% is excessively added, by an excessively high hard phase fraction and solid-solution strengthening, the ductility of ferrite is seriously degraded, and the formability is degraded. Hence, the Mn amount is set to 3.50% or less. Preferably, the amount is set in the range of 1.5% to 3.0%.

P: 0.003% to 0.100%

P is an effective element to strengthen steel, and this effect can be obtained by addition of P in an amount of 0.003% or more. However, when P in an amount of more than 0.100% is excessively added, due to grain boundary segregation, embrittlement occurs, and as a result, impact resistance is degraded. Hence, the P amount is set in the range of 0.003% to 0.100%.

S: 0.010% or less

Since S forms an inclusion, such as MnS, and causes degradation in impact resistance and cracking along a metal flow of a welded part, the S amount is preferably decreased as small as possible. From a manufacturing cost point of view, the amount is set to 0.010% or less; however, when the amount is 0.003% or less, since the hole expansion properties are significantly improved, the amount is preferably 0.003% or less.

Al: 0.010% to 0.06%

Al fixes oxygen in steel in process and in a slab and suppresses the generation of defects, such as slab cracking. The above effect is observed by addition in an amount of 0.010% or more. However, when a large amount is added, the risk probability of slab-cracking generation in continuous casting is increased, and manufacturing properties are degraded. In addition, since an alloying cost is increased, the amount is set to 0.06% or less.

N: 0.007% or less

When the total N amount is more than 0.007%, coarse AlN in a steel sheet is increased, and fatigue properties are rapidly degraded. Hence, the amount is set to 0.007% or less.

In the present invention, the above component compositions are used as essential components; however, the following component compositions may also be appropriately contained.

At least one selected from the group consisting of Cr: 0.005% to 2.00%, V: 0.005% to 2.00%, Mo: 0.005% to 2.00%, Ni: 0.005% to 2.00%, and Cu: 0.005 to 2.00%.

Cr: 0.005% to 2.00%

Cr suppresses the generation of perlite when cooling is performed from an annealing temperature, allows martensite, bainite, retained austenite, tempered martensite, and tempered bainite to be easily generated, and improves the product of the tensile strength and the elongation. This effect can be obtained by addition in an amount of 0.005% or more. However, when the amount is more than 2.00%, the effect is saturated, and as a result, it causes an increase in cost. Hence, the amount is set in the range of 0.005% to 2.00%.

V: 0.005% to 2.00%

V suppresses the generation of perlite when cooling is performed from the annealing temperature, allows martensite, bainite, retained austenite, tempered martensite, and tempered bainite to be easily generated, and improves the product of the tensile strength and the elongation. This effect can be obtained by addition in an amount of 0.005% or more. However, when the amount is more than 2.00%, the effect is saturated, and as a result, it causes an increase in cost. Hence, the amount is set in the range of 0.005% to 2.00%.

Mo: 0.005% to 2.00%

Mo suppresses the generation of perlite when cooling is performed from the annealing temperature, allows martensite, bainite, retained austenite, tempered martensite, and tempered bainite to be easily generated, and improves the product of the tensile strength and the elongation. This effect can be obtained by addition in an amount of 0.005% or more. However, when the amount is more than 2.00%, the effect is saturated, and as a result, it causes an increase in cost. Hence, the amount is set in the range of 0.005% to 2.00%.

Ni: 0.005% to 2.00%

Ni suppresses the generation of perlite when cooling is performed from the annealing temperature, allows martensite, bainite, retained austenite, tempered martensite, and tempered bainite to be easily generated, and improves the product of the tensile strength and the elongation. This effect can be obtained by addition in an amount of 0.005% or more. However, when the amount is more than 2.0%, the effect is saturated, and as a result, it causes an increase in cost. Hence, the amount is set in the range of 0.005% to 2.00%.

Cu: 0.005% to 2.00%

Cu suppresses the generation of perlite when cooling is performed from the annealing temperature, allows martensite, bainite, retained austenite, tempered martensite, and tempered bainite to be easily generated, and improves the product of the tensile strength and the elongation. This effect can be obtained by addition in an amount of 0.005% or more. However, when the amount is more than 2.00%, the effect is saturated, and as a result, it causes an increase in cost. Hence, the amount is set in the range of 0.005% to 2.00%.

One or two selected from the group consisting of of Ti: 0.01% to 0.2% and Nb: 0.01% to 0.1%.

Ti: 0.01% to 0.20%

Ti is effective to strengthen steel, and in addition, it uniformly precipitates carbides and deposits and strengthens a ferrite base; hence, the standard deviation of nano-hardness can be further decreased, and the product of the tensile strength and the hole expansion rate is improved. Although this effect can be obtained by addition in an amount of 0.01% or more, when the amount is more than 0.20%, the effect is saturated, and as a result, it causes an increase in cost. Hence, the amount is set in the range of 0.01% to 0.20%.

Nb: 0.01% to 0.10%

Nb is effective to strengthen steel, and in addition, it uniformly precipitates carbides and deposits and strengthens a ferrite base; hence, the standard deviation of nano-hardness can be further decreased, and the product of the tensile strength and the hole expansion rate is improved. Although this effect can be obtained by addition in an amount of 0.01% or more, when the amount is more than 0.10%, the effect is saturated, and as a result, it causes an increase in cost. Hence, the amount is set in the range of 0.01% to 0.10%.

B: 0.0002% to 0.005%

B has an effect of suppressing the generation of ferrite from austenite grain boundaries and of increasing the strength. This effect can be obtained by addition in an amount of 0.0002% or more. However, when the amount is more than 0.005%, the effect is saturated, and as a result, it causes an increase in cost. Hence, the amount is set in the range of 0.0002% to 0.005%.

At least one selected from the group consisting of Ca: 0.001% to 0.005% and REM: 0.001% to 0.005%.

Ca: 0.001% to 0.005%

Ca has a function to contribute to improvement in elongation and hole expansion rate, that is, in formability, by improvement in local ductility. This effect can be obtained by addition in an amount of 0.001% or more and is saturated in an amount of 0.005%. Hence, the amount is set in the range of 0.001% to 0.005%.

REM: 0.001% to 0.005%

REM has a function to contribute to improvement in elongation and hole expansion rate, that is, in formability, by improvement in local ductility. This effect can be obtained by addition in an amount of 0.001% or more and is saturated in an amount of 0.005%. Hence, the amount is set in the range of 0.001% to 0.005%.

Next, the steel sheet microstructure will be described.

Ferrite having an area fraction of 20% or more:

When the area fraction of ferrite is less than 20%, the product of the tensile strength and the elongation is degraded. Hence, the area fraction of ferrite is set to 20% or more and is preferably 50% or more.

The total area fraction of tempered martensite, tempered bainite, and bainite being 10% or more:

When the total area fraction of those phases is less than 10%, it becomes difficult to ensure the strength, and in addition, the product of the tensile strength and the elongation is also degraded. Hence the total area fraction of those phases is set to 10% or more. However, when those phases are excessively contained, the product of the tensile strength and the elongation is degraded; hence, the total area fraction of the above structure is preferably 50% or less.

The total area fraction of ferrite, tempered martensite, tempered bainite, and bainite being 90% or more:

When the total area fraction of those phases is less than 90%, the product of the tensile strength and the hole expansion rate is degraded. Hence the total area fraction of those phases is set to 90% or more and is preferably 95% or more.

The total area fraction of retained austenite and martensite being 5% or less:

When the total area fraction of those phases is set to 5% or less, the product of the tensile strength and the hole expansion rate is significantly improved. Preferably, the total area fraction is 3% or less.

The solid-solved Si amount and the solid-solved Mn amount in a base steel surface layer portion, which is in a region from a plating/base steel interface to a depth of 0.5 $\mu$m therefrom, will be described.
In a high-strength galvanized steel sheet which is not processed by an alloying treatment after hot-dip galvanizing, the average solid-solved Si amount and the average solid-solved Mn amount in the base steel surface layer portion, which is the region from a plating/base steel interface to a depth of 0.5 $\mu$m therefrom, are each 0.5 mass percent or less.
When the Si and Mn amounts in steel are large, since Si and Mn are segregated on the surface at an annealing stage right before hot-dip galvanizing, in a galvanized steel sheet which is not processed by an alloying treatment after hot-dip galvanizing, the anti-powdering property is liable to be degraded. Hence, in a galvanized steel sheet, in view of the anti-powdering property, it is necessary to perform internal oxidation of an easily oxidizable element, which is selectively oxidized at a base steel surface layer in annealing, so as to significantly decrease the absolute solid-solved amount of the easily oxidizable element in a parent material of a surface layer portion. When a region in which the internal oxidation is performed in a manufacturing process is the base steel surface layer portion in the region from a plating/base steel interface to a depth of 0.5 $\mu$m therefrom, plating properties can be sufficiently ensured; hence, the composition control in this region is taken into consideration. When the solid-solved Si amount and the solid-solved Mn amount in a base steel in the region from a plating/base steel interface to a depth of 0.5 $\mu$m therefrom are each 0.5 mass percent or less, an anti-powdering property which is sufficient in practical use can be ensured, and the generation of non-plating can be prevented; however, when the solid-solved amount is more than 0.5 mass percent, the non-plating may occur and/or the anti-powdering property may be degraded. Hence, in order to ensure the anti-powdering property and to prevent the generation of non-plating, the solid-solved Si amount and the solid-solved Mn amount in the base steel surface layer portion in the region from a plating/base steel interface to a depth of 0.5 $\mu$m therefrom are each necessarily set to 0.5 mass percent or less.
Before being passed through CGL (continuous galvanizing line), the parent material may be processed in advance by surface modification and internal oxidation. Although a surface modification method is not particularly limited, for example, a hot-rolled steel sheet may be processed by a heat treatment or may be coiled at a relatively high temperature, such as 650C° or more, or a cooling rate of a coiled coil may be decreased. As a heat treatment method, for example, a heat treatment method in which a hot-rolled coil is processed at 650C° in a non-reducing atmosphere, such as an $N_2$ atmosphere, may be mentioned.
In addition, the surface segregation of Si, Mn, and the like right before hot-dip galvanizing may be suppressed such that a heating zone of CGL having a DFF (direct-firing furnace) or an NOF (non-oxidizing furnace) type is used, the base steel surface layer is processed by an oxidation treatment in the heating zone of CGL and is then processed by internal oxidation in the manner as described above using oxygen supplied from iron scale when a reducing treatment is performed so as to decrease the solid-solved element amount of the easily oxidizable element in a parent material surface layer. As described later, as for the solid-solved Si amount and the solid-solved Mn amount in the surface layer portion, for example, when a steel sheet temperature at a heating-zone outlet side is increased when a reducing treatment is performed in a reducing zone following an oxidation treatment, Si, Mn, and the like are processed by internal oxidation, so that the solid-solved Si amount and the solid-solved Mn amount in the base steel surface layer portion can be decreased; hence, by appropriate control of the temperature at the heating-zone outlet side, the solid-solved Si amount and the solid-solved Mn amount in the base steel surface layer portion can be controlled.

The presence of oxides can be determined, for example, by a method in which after a plated steel sheet is buried in a resin and is then polished to expose a steel sheet cross-section, the coexistence of oxygen and Si, Mn, or the like, which is an easily oxidizable element, is composition-analyzed using EPMA, or by composition analysis of an extraction replica of a cross-section or a thin-film sample processed by FIB using TEM.

The solid-solved Si and Mn amounts in the base steel can be determined by composition analysis of a cross-section of a sample prepared in the manner as described above at a place at which no oxides are precipitated. In addition, in order to prevent the error caused by characteristic x-rays from oxides present in the vicinity of an analyzed location, which is due to the spread of electron beams, for the measurement of the solid-solved amount, a method is preferable in which TEM-EDS composition analysis of a thin-film sample processed by FIB is performed at a magnification of 20,000 times or more. In this method, since the sample is a thin film, the spread of electron beams is suppressed, the error caused by characteristic x-rays from oxides present in the vicinity of an analyzed location is suppressed, and hence precise measurement of the solid-solved element amount of the base steel itself can be performed.

As for a galvanized steel sheet in which a plating layer is not processed by an alloying treatment, a surface layer structure right below the plating layer maintains, to a much greater degree, the conditions right after annealing performed right before plating, and when the solid-solved Si amount and the solid-solved Mn amount are decreased beforehand, the solid-solved Si amount and the solid-solved Mn amount in the base steel surface layer portion in the region from a plating/base steel interface to a depth of 0.5 μm therefrom can be controlled to 0.5 mass percent or less.

In a galvanized steel sheet in which a plating layer is processed by an alloying treatment, an Fe percent in the plating layer is 7% to 15%, and as for the average solid-solved Si amount and the average solid-solved Mn amount in the base steel surface layer portion in the region from a plating/base steel interface to a depth of 0.5 μm therefrom, the average solid-solved Si amount is 70% to 90% of a Si amount of an average parent material composition, and the average solid-solved Mn amount is 50% to 90% of an Mn amount of the average parent material composition.

When the Fe percent in the plating layer is less than 7%, appearance defects, such as burn irregularities, occur, and when the Fe percent is more than 15%, plating-layer peeling frequently occurs in a bending step; hence, the Fe percent in the plating layer must be in the range of 7% to 15%. The Fe percent is more preferably in the range of 8% to 13%.

In an alloyed galvanized steel sheet, the surface layer structure right below the plating layer is slightly different from the conditions right after annealing performed right before plating since the base steel surface layer is dissolved in the plating layer by the alloying treatment, that is, the solid-solved Si amount and the solid-solved Mn amount are increased as compared to those of a galvanized steel sheet in which a plating layer is not processed by an alloying treatment. The average solid-solved Si amount and the solid-solved Mn amount in the base steel surface layer portion in the region from a plating/base steel interface to a depth of 0.5 μm therefrom are required to be 70% to 90% of the Si amount and 50% to 90% of the Mn amount, respectively, of the average parent material composition in order to ensure the anti-powdering property and alloying uniformity.

When Si and Mn are solid-solved in the parent material to a certain extent, an effect of improving the adhesion at an interface after the formation of a Fe-Zn alloy can be obtained. The reason for this is believed that Si, Mn and the like solid-solved in the parent material appropriately cause an uneven Fe-Zn alloying reaction to induce an anchor effect at the interface. When the average solid-solved Si amount in the base steel surface layer portion in the region from a plating/base steel interface to a depth of 0.5 μm therefrom is 70% or more of the Si amount of the average parent material composition and when the average solid-solved Mn amount in the base steel surface layer portion in the region from a plating/base steel interface to a depth of 0.5 μm therefrom is 50% or more of the Mn amount of the average parent material composition, the above effect can be sufficiently obtained. When the average solid-solved Si amount is less than 70% of the Si amount of the average parent material composition and when the average solid-solved Mn amount is less than 50% of the Mn amount of the average parent material composition, the above effect cannot be sufficiently obtained, the anchor effect is degraded, and the anti-powdering property is degraded. In the region from a plating/base steel interface to a depth of 0.5 μm therefrom, when the average solid-solved Si amount is more than 90% of the Si amount of the average parent material composition, and when the average solid-solved Mn amount is more than 90% of the Mn amount of the average parent material composition, the surface segregation of Si and Mn is increased in annealing, non-plating occurs, and as a result, the anti-powering property is degraded.

In addition, although a solid-solved P amount and a solid-solved Al amount in the base steel surface layer portion in the region from a plating/base steel interface to a depth of 0.5 μm therefrom are not particularly limited, they are preferably less than 50% of a P amount and an Al amount, respectively, of the average parent material composition. However, when the P and Al contents are small, since their presence is difficult to confirm by analysis, the upper limits of P and Al are not particularly limited.

Galvanized amount per one surface being 20 to 150 g/m$^2$: When the galvanized amount is less than 20 g/m$^2$, it is difficult to ensure the corrosion resistance. In addition, when the galvanized amount is more than 150 g/m$^2$, cost is increased. Hence, the galvanized amount per one surface is set in the range of 20 to 150 g/m$^2$. In addition, in the case of alloyed hot-dip galvanizing, when the iron content (Fe percent (mass percent)) in the plating layer is less than 7%, alloyed irregularities seriously arise, and flaking occurs in a bending step; hence, it is not preferable. In addition, in the case in which the Fe percent is more than 15%, a hard r phase is formed at the plating/base steel interface; hence, it is not preferable. Accordingly, in the case of the alloyed hot-dip galvanizing, the Fe percent is preferably in the range of 7% to 15%.

Next, a manufacturing method will be described.

A steel slab having the component composition described above is formed through melting, followed by performing hot rolling and cold rolling, so that a cold-rolled steel sheet is manufactured. The slab formation may be performed in accordance with a conventional method using ingot making, a continuous cast slab, or a thin slab caster. Hot rolling may be performed by reheating after cooling or may be performed immediately after casting. Although a finish rolling temperature is preferably set to $Ar_3$ or more, it is not particularly limited. Although cold rolling may be performed at a cold rolling rate of approximately 30 to 60%, it is not particularly limited.

Next, after the cold-rolled steel sheet is annealed in a continuous galvanizing line having a heating zone of a direct-firing furnace or a non-oxidizing furnace type, hot-dip galvanizing is performed, or an alloying treatment is further performed following the hot-dip galvanizing.

An outlet-side temperature of the heating zone is set to 600C° or more, and an average heating rate in the furnace of the heating zone is set to 10C°/sec or more from 400C° to the heating-zone outlet-side temperature.

In a continuous galvanizing process, in order to activate the surface at a low cost and to ensure the anti-powdering property of a steel sheet containing a large amount of Si and Mn, manufacturing is preferably performed in CGL (continuous galvanizing line) having a heating zone of a DFF (direct-firing furnace) or a NOF (non-oxidizing furnace) type.

In particular, after an oxidation treatment is performed on the base steel surface layer in the heating zone in the CGL furnace, the base steel surface layer is processed by internal oxidation as described above by oxygen supplied from iron scale when a reducing treatment is performed, so that solid-solved element amounts of easily oxidizable elements in the parent material are decreased; as a result, the surface segregation of Si, Mn, and the like on the steel sheet surface right before hot-dip galvanizing is suppressed. For this purpose, the steel sheet has to be heated so that the steel sheet temperature at the heating-zone outlet side is 600° or more. When the heating-zone outlet-side temperature is less than 600°, an oxidized amount of the steel sheet is small due to a low temperature, and the internal oxidation of the base steel surface layer becomes insufficient when the reducing treatment is performed, so that the solid-solved Si amount and the solid-solved Mn amount in the base steel surface layer right below the plating layer cannot be sufficiently decreased.

In addition, when the average heating rate from 400° to the heating-zone outlet-side temperature in the furnace of the heating zone is less than 10°/sec, tight oxide scale is generated and is not easily reduced, and hence the average heating rate must be set to 10°/sec or more. Since oxidation hardly occurs at a temperature of less than 400°, the heating rate at less than 400° is not particularly limited. By rapid heating in the heating zone as described above, in addition to an improvement in plating properties, since the steel sheet structure is uniformly and finely formed, the variation in nano-hardness is decreased, and the hole expansion properties are improved.

The dew point of the heating zone is preferably 0°C or more, and the $O_2$ concentration is preferably 0.1% or more.

Next, in the reducing zone, heating is performed to a maximum reaching temperature of 750° or more at an average heating rate of 0.1 to 10°C/sec from a reducing-zone inlet side to the maximum reaching temperature and is held for 30 seconds or more.

Heating from the reducing-zone inlet side to the maximum reaching temperature being performed at an average heating rate of 0.1 to 10°C/sec:

When the average heating rate from the reducing-zone inlet side to the maximum reaching temperature is less than 0.1°C/sec, since a sheet passing speed must be decreased, the productivity is degraded. In addition, when the average heating rate is 10°C/sec or more, since, in the reducing zone, oxygen in base steel scale reacts with hydrogen in the reducing zone to form $H_2O$, Fe-based oxide scale of the base steel surface layer is consumed by a reducing reaction, and the oxygen amount, which is diffused from the parent material surface layer into the base steel to perform internal oxidation of Si, Mn, and the like, is decreased. As a result, large solid-solved Si and Mn amounts are present in the parent material surface portion, and since those elements are selectively oxidized at a steel sheet surface right before hot-dip galvanizing, the surface segregation of Si, Mn, and the like is facilitated.

Since the reducing zone performs a reducing treatment of the surface, $H_2$ at a concentration of 1% to 100% is preferably contained.

Heating performed to a maximum reaching temperature of 750°C or more and held for 30 seconds or more:

When the maximum reaching temperature is less than 750°C, or when the holding time is less than 30 seconds, the product of the tensile strength and the elongation is not improved. The reason for this is believed that strain generated after cold rolling is not sufficiently reduced. The upper limit of the heating temperature and the upper limit of the holding time are not particularly limited; however, since the effect is saturated by heating to 950°C or more or holding for 600 seconds or more, and further, since the cost is increased thereby, the heating temperature and the holding time are preferably less than 950°C and less than 600 seconds, respectively.

Cooling performed from 750°C to 350°C or less at an average cooling rate of 10°C/sec or more:

A steel sheet heated in the heating zone is cooled from 750°C to 350°C or less at an average cooling rate of 10°C/sec or more. When the average cooling rate is less than 10°C/sec, since perlite is generated in the steel sheet, the total area of ferrite, tempered martensite, bainite, and tempered bainite cannot be 90% or more, and hence the product of the tensile strength and the elongation and the product of the tensile strength and the hole expansion rate cannot be improved. As the cooling rate is increased, a harder low-temperature transformation phase is likely to be generated. In the case of the present invention, since tempered martensite is preferably generated as much as possible, cooling is preferably performed at an average cooling rate of 30°C/sec or more, and when the average cooling rate is 100°C/sec or more, it is more preferable. On the other hand, when it is more than 500°C/sec, the shape of a steel sheet is degraded, and it becomes difficult to perform appropriate control of an adhesion amount of hot-dip plating and to ensure the uniformity along an entire sheet length; hence, the average cooling rate is preferably 500°C/sec or less.

A reaching temperature condition by cooling is one of the most important factors of the present invention. When the reaching temperature by cooling is more than 350°C, martensite and/or retained austenite in an amount of more than 10% is generated in a final structure after hot-dip plating, and hence the product of the tensile strength and the hole expansion rate is seriously degraded. Hence, the reaching temperature by cooling is set to 350°C or less. For the above property, the reaching temperature by cooling is preferably 200°C or less; however, the effect is saturated at room temperature or less. The time from the end of cooling to the start of re-heating is not particularly limited since it has no influence on materials. Although the time from the end of cooling to the start of re-heating is preferably decreased in terms of cost reduction, after the end of cooling, the steel sheet may be coiled once and be again passed through a plating line for heating. In this case, in order to remove scales and the like on the steel sheet surface, pickling and cleaning may be performed before plating.

Hot-dip galvanizing being performed after heating performed to 350°C to 700°C and then held for 1 second or more:

After cooling is rapidly performed to 350°C or less, heating is performed. In the heating, when heating is performed to less than 350°C or more than 700°C, the product of the tensile strength and the hole expansion rate is seriously degraded. The reason for this is believed that even after hot-dip plating, hard phases, such as retained austenite and martensite, are generated. From a cost point of view, the heating is more preferably performed to less than 500°C. In addition, the heating is preferably performed from the temperature before heating to a higher temperature, and an increase in temperature is preferably 200°C or more and is more preferably 250°C or more. When the holding time after the heating is less than 1 second, the product of the tensile strength and the hole expansion rate is not improved; hence, the holding time is set to 1 second or more. In addition, although the holding time is set to 600 seconds and more, the effect is saturated, and hence, in consideration of the above property, the holding time is preferably set in the range of 10 to 300 seconds.

Hot-dip galvanizing can be performed by immersing a steel sheet into a general plating bath. In addition, after the hot-dip galvanizing, when an alloying treatment of the plating film is performed, after the immersion into the plating bath, heating may be performed to 490 to 550°C and may be held for 1 to 30 seconds.

Examples

Hereinafter, the present invention will be described in detail with reference to examples; however, the following examples do not limit the present invention, and design changes without departing from the spirit and scope of the present invention are also included in the technical range of the present invention.

Slabs formed by vacuum melting of steel (A to T) having chemical components shown in Table 1 were each hot-rolled at a finish rolling temperature of 900°C to form a hot-rolled steel sheet and were each further cold-rolled at a cold rolling rate of 50% following pickling, so that a cold-rolled steel sheet having a thickness of 1.6 mm was obtained. After this cold-rolled steel sheet was annealed under conditions shown in Table 2, hot-dip galvanizing was performed at 460°C, and an alloying treatment was then performed by heating at 480 to 580°C for 10 seconds followed by performing cooling at a rate of 10°C/sec. Some galvanized steel sheets (steel J and M), which were not processed by the alloying treatment, were also manufactured. The plating adhesion amounts were each set in the range of 35 to 45 g/m$^2$.

The anti-powdering property of the plated steel sheets thus obtained was evaluated. For a plated steel sheet (GA) processed by the alloying treatment, after a bent portion which was bent by 90° was processed by Cello-Tape (registered trade name) peeling, the Zn count number of the peeled amount per unit length was measured by using fluorescent x-rays, and in accordance with the following standard, ranks 1 and 2 were evaluated as excellent ($\bigcirc$, $\Delta$), and rank 3 or more was evaluated as defective.

| Zn Count Number by Fluorescent X-Rays | Rank |
| --- | --- |
| 0 to less than 500 | 1 (excellent) |
| 500 to less than 1,000 | 2 |
| 1,000 to less than 2,000 | 3 |
| 2,000 to less than 3,000 | 4 |
| more than 3,000 | 5 (inferior) |

As for a steel sheet (GI) which was not alloyed, in an impact test, plate peeling was required to be suppressed. Accordingly, a ball impact test was performed, a processed portion was treated by Cello-Tape (registered trade name) peeling, and the occurrence of plating layer peeling was determined by visual inspection.

$\bigcirc$ No peeling of plating layer

x Peeling of plating layer

The following investigation was performed on the galvanized steel sheets manufactured as described above. The investigation results are shown in Table 3.

After a cross-sectional microstructure of the steel sheet was exposed using a nital solution at a concentration of 3%, a sheet thickness 1/4 position (a position corresponding to a depth of one fourth of the thickness of the sheet from the surface thereof) was observed by a scanning electron microscope (SEM) at a magnification of 1,000 times, and from a microstructure photograph thus obtained, the area rate of a ferrite phase was quantified (the structure may be quantified by using an image processing software such as Photo Shop by Adobe Inc). The total area fraction of martensite and retained austenite was obtained such that SEM photographs were taken at an appropriate magnification in the range of 1,000 to 3,000 times in accordance with the degree of fineness of the structure, and among parts other than ferrite, a part where no carbides were precipitated, which was determined by visual inspection, was quantified. Tempered martensite, tempered bainite, and bainite were regarded as a part other than ferrite, martensite, retained austenite, and perlite, so that the total area fraction of the tempered martensite, tempered bainite, and bainite was quantified. In addition, the quantification of the structure may be performed using the above image processing software.

As for the tensile properties, a method was performed in accordance with JIS Z 2241 using a JIS No. 5 test piece. TS (tensile strength) and T.El (total elongation) were measured, and the value of strength-elongation balance represented by the product of the strength and the total elongation (TSxT.El) was obtained.

A hole expansion test was performed in accordance with JFST 1001 of the Japan Iron and Steel Federation Standard, and under each sample condition, the average value was obtained from three test results.

As for the nano-hardness, measurement was performed at a sheet thickness 1/4 position (a position corresponding to a depth of one fourth of the thickness of the sheet from the surface thereof), and by using TRIBOSCOPE manufactured by Hysitron Inc., 49 to 56 points, 7 points by 7 to 8 points at intervals of 3 to 5 $\mu$m, were measured. The indentation was formed to have a triangle shape having a one-side length of 300 to 800 nm by primarily applying a load of 1,000 $\mu$N, and when the one-side length of some indentation was more than 800 nm, the load was changed to 500 $\mu$N. The measurement was performed at positions at which crystal grain boundaries and different phase boundaries were not present. The standard deviation $\sigma$ was obtained from n hardness data x using the above equation (1).

In order to measure the solid-solved Si and Mn amounts of the surface layer, a point analysis of Si and Mn was performed by TEM-EDS on a thin-film cross-sectional sample processed by FIB in a region from just above a plating/parent material interface to a depth of 0.5 $\mu$m to the base steel side, in which no precipitation was present in order to avoid disturbance. Measurement was performed at arbitrary 10 points, and the average value obtained therefrom was regarded as an evaluation value. For the steel sheet (GA) processed by an alloying treatment, the chemical components (Si, Mn) shown in Table 1 were used as the average parent material composition, and the ratio of the solid-solved amount (average value) obtained as described above to the chemical component value of Table 1 was obtained and is shown in Table 3.

TABLE 1

| STEEL TYPE | C | Si | Mn | P | S | Al | N | Cr | V | Mo | Ni | Cu | Ti | Nb | B | Ca | Y | (MASS PERCENT %) |
|---|---|---|---|---|---|---|---|---|---|---|---|---|---|---|---|---|---|---|
| A | 0.06 | 0.85 | 2.52 | 0.020 | 0.003 | 0.035 | 0.003 | | | | | | | | | | | PRESENT INVENTION STEEL |
| B | 0.08 | 1.24 | 2.40 | 0.015 | 0.002 | 0.037 | 0.002 | | | | | | | | | | | PRESENT INVENTION STEEL |
| C | 0.12 | 0.88 | 2.79 | 0.017 | 0.004 | 0.021 | 0.005 | | | | | | | | | | | PRESENT INVENTION STEEL |
| D | 0.14 | 1.02 | 3.21 | 0.019 | 0.002 | 0.041 | 0.004 | | | | | | | | | | | PRESENT INVENTION STEEL |
| E | 0.19 | 1.14 | 1.83 | 0.025 | 0.003 | 0.036 | 0.004 | | | | | | | | | | | PRESENT INVENTION STEEL |
| F | 0.25 | 0.92 | 3.30 | 0.013 | 0.005 | 0.028 | 0.005 | | | | | | | | | | | PRESENT INVENTION STEEL |
| G | 0.13 | 1.32 | 2.02 | 0.008 | 0.006 | 0.031 | 0.003 | 0.60 | | | | | | | | | | PRESENT INVENTION STEEL |
| H | 0.16 | 0.62 | 2.75 | 0.014 | 0.002 | 0.033 | 0.004 | | 0.2 | | | | | | | | | REFERENCE STEEL |
| I | 0.08 | 0.94 | 2.24 | 0.007 | 0.003 | 0.025 | 0.002 | | | 0.3 | | | | | | | | PRESENT INVENTION STEEL |
| J | 0.09 | 1.13 | 2.25 | 0.007 | 0.002 | 0.033 | 0.001 | | | | 0.8 | | | | | | | PRESENT INVENTION STEEL |
| K | 0.10 | 1.45 | 2.57 | 0.014 | 0.001 | 0.042 | 0.003 | | | | | 0.3 | | | | | | PRESENT INVENTION |
| L | 0.10 | 0.76 | 1.92 | 0.021 | 0.005 | 0.015 | 0.004 | | | | | | 0.05 | | | | | REFERENCE STEEL |
| M | 0.15 | 1.22 | 2.92 | 0.006 | 0.004 | 0.026 | 0.002 | | | | | | | 0.04 | | | | PRESENT INVENTION STEEL |
| N | 0.09 | 1.95 | 2.07 | 0.012 | 0.003 | 0.028 | 0.005 | | | | | | | | 0.001 | | | PRESENT INVENTION STEEL |
| O | 0.08 | 0.96 | 2.16 | 0.010 | 0.002 | 0.046 | 0.001 | 0.30 | | | | | | | | 0.003 | | PRESENT INVENTION STEEL |
| P | 0.07 | 1.34 | 2.91 | 0.019 | 0.004 | 0.036 | 0.003 | | | 0.2 | | | | | | | 0.002 | PRESENT INVENTION STEEL |
| Q | 0.04 | 1.42 | 3.22 | 0.013 | 0.002 | 0.022 | 0.002 | | | | | | | | | | | COMPARATIVE STEEL |
| R | 0.12 | 0.52 | 2.63 | 0.017 | 0.006 | 0.041 | 0.004 | | | | | | | | | | | COMPARATIVE STEEL |
| S | 0.08 | 0.82 | 3.61 | 0.022 | 0.001 | 0.036 | 0.002 | | | | | | | | | | | COMPARATIVE STEEL |
| I | 0.15 | 1.24 | 0.44 | 0.007 | 0.003 | 0.029 | 0.002 | | | | | | | | | | | COMPARATIVE STEEL |

UNDER LINE PORTION: CONDITION OUT OF THE PRESENT INVENTION

EP 2 128 295 B1

TABLE 2

| No. | STEEL TYPE | HEATING-ZONE OUTLET-SIDE TEMP. (°C) | HEATING RATE OF HEATING ZONE (°C/s) | HEATING RATE OF REDUCING ZONE (°C/s) | MAXIMUM REACHING TEMP. (°C) | HOLDING TIME (s) | COOLING RATE (°C/s) | REACHING TEMP. AFTER COOLING (°C) | RE-HEATING TEMP. (°C) | HOLDING TIME AFTER RE-HEATING (s) | RE-HEATING TEMP.-REACHING TEMP. AFTER COOLING (°C) | ALLOYING TEMP. (°C) | PLATING ALLOYING TREATMENT | |
|---|---|---|---|---|---|---|---|---|---|---|---|---|---|---|
| 1 | A | 650 | 15 | 2.0 | 820 | 60 | 200 | 300 | 500 | 30 | 200 | 520 | YES | PRESENT INVENTION EX. |
| 1-1 | A | 500 | 15 | 2.0 | 820 | 60 | 200 | 300 | 500 | 30 | 200 | 480 | YES | COMP. EX. |
| 1-2 | A | 818 | 15 | 2.0 | 820 | 60 | 200 | 300 | 500 | 30 | 200 | 580 | YES | COMP. EX. |
| 2 | A | 650 | 15 | 2.0 | 720 | 60 | 200 | 300 | 500 | 30 | 200 | 520 | YES | COMP. EX. |
| 3 | B | 700 | 20 | 1.0 | 800 | 90 | 50 | 60 | 400 | 60 | 340 | 520 | YES | PRESENT INVENTION EX. |
| 4 | B | 700 | 20 | 1.0 | 800 | 70 | 50 | 60 | 400 | 60 | 340 | 520 | YES | COMP. EX. |
| 5 | C | 750 | 15 | 0.8 | 880 | 90 | 30 | 200 | 450 | 45 | 250 | 520 | YES | PRESENT INVENTION EX. |
| 6 | C | 750 | 15 | 0.8 | 880 | 90 | 5 | 200 | 450 | 45 | 250 | 520 | YES | COMP. EX |
| 7 | D | 630 | 20 | 0.6 | 780 | 150 | 15 | 20 | 450 | 60 | 430 | 520 | YES | PRESENT INVENTION EX. |
| 8 | D | 630 | 20 | 0.6 | 780 | 150 | 15 | 400 | 450 | 60 | 50 | 520 | YES | COMP. EX. |
| 9 | E | 620 | 10 | 1.0 | 850 | 75 | 80 | 100 | 400 | 30 | 300 | 520 | YES | PRESENT INVENTION EX. |
| 10 | E | 620 | 10 | 1.0 | 850 | 75 | 80 | 100 | 300 | 30 | 200 | 520 | YES | COMP. EX. |
| 11 | E | 620 | 10 | 1.0 | 850 | 75 | 80 | 100 | 720 | 30 | 620 | 520 | YES | COMP. EX. |

| No. | STEEL TYPE | HEATING-ZONE OUTLET-SIDE TEMP. (°C) | HEATING RATE OF HEATING ZONE (°C/s) | HEATING RATE OF REDUCING ZONE (°C/s) | MAXIMUM REACHING TEMP. (°C) | HOLDING TIME (s) | COOLING RATE (°C/s) | REACHING TEMP. AFTER COOLING (°C) | RE-HEATING TEMP. (°C) | HOLDING TIME AFTER RE-HEATING (s) | RE-HEATING TEMP.-REACHING TEMP. AFTER COOLING (°C) | ALLOYING TEMP. (°C) | PLATING ALLOYING TREATMENT | |
|---|---|---|---|---|---|---|---|---|---|---|---|---|---|---|
| 12 | F | 680 | 20 | 4.0 | 800 | 240 | 90 | 150 | 400 | 240 | 250 | 520 | YES | PRESENT INVENTION EX. |
| 13 | F | 680 | 20 | 4.0 | 800 | 240 | 90 | 150 | 400 | 0 | 250 | 520 | YES | COMP. EX. |
| 14 | G | 700 | 25 | 0.8 | 850 | 60 | 100 | 100 | 500 | 30 | 400 | 520 | YES | PRESENT INVENTION EX. |
| 15 | G | 700 | 25 | | 850 | 60 | 100 | 100 | 500 | 2 | 400 | 520 | YES | PRESENT INVENTION EX. |
| 16 | H | 650 | 30 | 1.5 | 840 | 120 | 90 | 50 | 400 | 30 | 350 | 520 | YES | REFERENCE EX. |
| 17 | I | 750 | 20 | 0.5 | 830 | 75 | 150 | 20 | 500 | 45 | 480 | 520 | YES | PRESENT INVENTION EX. |
| 18 | I | 750 | 20 | 0.5 | 830 | 75 | 150 | 350 | 500 | 45 | 150 | 520 | YES | PRESENT INVENTION EX. |
| 19 | J | 720 | 15 | 2.0 | 800 | 45 | 1000 | 20 | 400 | 20 | 380 | - | NO | PRESENT INVENTION EX. |
| 20 | K | 800 | 30 | 0.7 | 750 | 200 | 100 | 150 | 550 | 10 | 400 | 520 | YES | INVENTION EX. |
| 21 | L | 700 | 15 | 5.0 | 780 | 120 | 200 | 300 | 400 | 60 | 100 | 520 | YES | REFERENCE EX. |

| No. | STEEL TYPE | HEATING-ZONE OUT-LET-SIDE TEMP. (°C) | HEAT-ING RATE OF HEAT-ING ZONE (°C/s) | HEATING RATE OF RE-DUCING ZONE (°C/s) | MAXI-MUM REACH-ING TEMP. (°C) | HOLD-ING TIME (s) | COOL-ING RATE (°C/s) | REACH-ING TEMP. AF-TER COOLING (°C) | RE-HEAT-ING TEMP. (°C) | HOLDING TIME AFTER RE-HEATING (s) | RE-HEAT-ING TEMP.-REACHING TEMP. AF-TER COOL-ING (°C) | ALLOY-ING TEMP. (°C) | PLATING ALLOYING TREAT-MENT | |
|---|---|---|---|---|---|---|---|---|---|---|---|---|---|---|
| 22 | M | 750 | 15 | 1.5 | 840 | 90 | 200 | 100 | 400 | 20 | 300 | - | NO | PRESENT INVENTION EX. |
| 23 | N | 680 | 20 | 1.5 | 820 | 60 | 50 | 250 | 450 | 90 | 200 | 520 | YES | PRESENT INVENTION EX. |
| 24 | O | 770 | 12 | 2.5 | 800 | 45 | 150 | 100 | 450 | 150 | 350 | 520 | YES | PRESENT INVENTION EX. |
| 25 | P | 600 | 40 | 0.2 | 860 | 30 | 30 | 200 | 450 | 30 | 250 | 520 | YES | PRESENT INVENTION EX. |
| 26 | Q | 620 | 20 | 1.0 | 780 | 60 | 30 | 200 | 350 | 60 | 150 | 520 | YES | COMP. EX. |
| 27 | R | 650 | 20 | 1.0 | 820 | 90 | 30 | 50 | 400 | 30 | 350 | 520 | YES | COMP. EX. |
| 28 | S | 700 | 20 | 1.0 | 820 | 75 | 200 | 20 | 400 | 120 | 380 | 520 | YES | COMP. EX. |
| 29 | T | 750 | 20 | 1.0 | 840 | 90 | 30 | 100 | 400 | 120 | 300 | 520 | YES | COMP. EX. |

UNDER LINE PORTION: CONDITION OUT OF THE PRESENT INVENTION *TEMP.: TEMPERATURE / COMP.: COMPARATIVE / Ex. : EXAMPLE

TABLE 3

| No. | STEEL TYPE | Si | Mn | FERRITE AMOUNT (%) | TEMPERED MARTENSITE + TEMPERED BAINITE + BAINITE (%) | AMOUNT OF MARTENSITE + RETAINED AUSTENITE (%) | FERRITE + TEMPERED MARTENSITE + TEMPERED BAINITE + BAINITE (%) | STANDARD DEVIATION OF NANO-HARDNESS (Gpa) | TS (Mpa) | TOTAL ELONGATION (%) | TS × ELONGATION (Mpa %) | HOLE EXPANSION RATE (%) | TS × HOLE EXPANSION RATE (Mpa %) | Fe % | SURFACE-LAYER SOLID-SOLVED Si AMOUNT (GA) (%) | SURFACE-LAYER SOLID-SOLVED Mn AMOUNT (GA) (%) | RATIO OF SURFACE-LAYER SOLID-SOLVED Si AMOUNT (GA) | RATIO OF SURFACE-LAYER SOLID-SOLVED Mn AMOUNT (GA) | SURFACE-LAYER SOLID-SOLVED Si AMOUNT (GI) (%) | SURFACE-LAYER SOLID-SOLVED Mn AMOUNT (GI) (%) | ANTI-POWDERING PROPERTY | |
|---|---|---|---|---|---|---|---|---|---|---|---|---|---|---|---|---|---|---|---|---|---|---|
| 1 | A | 0.85 | 2.52 | 57 | 40 | 3 | 97 | 1.42 | 824 | 20.0 | 16480 | 62.0 | 51088 | 10 | 0.65 | 1.50 | 0.76 | 0.60 | - | - | o | PRESENT INVENTION EX. |
| 1-1 | A | 0.85 | 2.52 | 57 | 38 | 5 | 87 | 1.43 | 830 | 18.0 | 14940 | 50.0 | 41500 | 6 | 0.81 | 2.20 | 0.95 | 0.87 | - | - | × | COMP. EX. OF CLAIM 10 |
| 1-2 | A | 0.85 | 2.52 | 57 | 39 | 5 | 86 | 1.44 | 826 | 17.0 | 14042 | 51.0 | 42126 | 16 | 0.30 | 0.60 | 0.35 | 0.24 | - | - | × | COMP. EX. OF CLAIM 10 |
| 2 | A | 0.85 | 2.52 | 92 | 7 | 1 | 99 | 1.61 | 761 | 17.3 | 13165 | 55.2 | 42007 | 11 | 0.65 | 1.50 | 0.76 | 0.60 | - | - | o | COMP. EX. |
| 3 | B | 1.24 | 2.40 | 72 | 26 | 2 | 98 | 1.28 | 816 | 22.5 | 18360 | 72.8 | 59405 | 9 | 1.00 | 1.30 | 0.81 | 0.54 | - | - | o | PRESENT INVENTION EX. |
| 4 | B | 1.24 | 2.40 | 88 | 8 | 4 | 96 | 1.52 | 751 | 18.4 | 13818 | 57.1 | 42882 | 10 | 1.00 | 1.30 | 0.81 | 0.54 | - | - | o | COMP. EX. |
| 5 | C | 0.88 | 2.79 | 63 | 34 | 3 | 97 | 1.35 | 1017 | 15.3 | 15560 | 55.3 | 56240 | 12 | 0.70 | 1.60 | 0.80 | 0.57 | - | - | o | PRESENT INVENTION EX. |
| 6 | C | 0.88 | 2.79 | 65 | 19 | 3 | 84 | 2.20 | 895 | 16.5 | 14768 | 43.5 | 38933 | 11 | 0.70 | 1.60 | 0.80 | 0.57 | - | - | o | COMP. EX. |
| 7 | D | 1.02 | 3.21 | 72 | 27 | 1 | 99 | 1.36 | 1027 | 15.7 | 16124 | 52.4 | 53815 | 8 | 0.80 | 1.70 | 0.78 | 0.53 | - | - | o | PRESENT INVENTION EX. |
| 8 | D | 1.02 | 3.21 | 70 | 17 | 13 | 87 | 2.21 | 1052 | 15.2 | 15990 | 32.1 | 33769 | 10 | 0.80 | 1.70 | 0.78 | 0.53 | - | - | o | COMP. EX. |
| 9 | E | 1.14 | 1.83 | 54 | 39 | 7 | 93 | 1.42 | 1225 | 12.6 | 15435 | 44.5 | 54513 | 12 | 0.90 | 1.10 | 0.79 | 0.60 | - | - | o | PRESENT INVENTION EX. |
| 10 | E | 1.14 | 1.83 | 51 | 28 | 21 | 79 | 2.50 | 1325 | 11.4 | 15105 | 21.1 | 27958 | 11 | 0.90 | 1.10 | 0.79 | 0.60 | - | - | o | COMP. EX. |
| 11 | E | 1.14 | 1.83 | 47 | 37 | 16 | 84 | 2.41 | 1287 | 11.9 | 15315 | 22.5 | 28958 | 11 | 0.90 | 1.10 | 0.79 | 0.60 | - | - | o | COMP. EX. |
| 12 | F | 0.92 | 3.30 | 37 | 57 | 6 | 94 | 1.46 | 1208 | 12.5 | 15100 | 44.3 | 53514 | 10 | 0.70 | 1.80 | 0.76 | 0.55 | - | - | o | PRESENT INVENTION EX. |
| 13 | F | 0.92 | 3.30 | 39 | 40 | 21 | 79 | 4.25 | 1383 | 11.5 | 15905 | 10.2 | 14107 | 10 | 0.70 | 1.80 | 0.76 | 0.55 | - | - | o | COMP. EX. |
| 14 | G | 1.32 | 2.02 | 72 | 26 | 2 | 98 | 0.72 | 986 | 16.8 | 16565 | 63.4 | 62512 | 9 | 1.00 | 1.20 | 0.76 | 0.59 | - | - | o | PRESENT INVENTION EX. |
| 15 | G | 1.32 | 2.02 | 70 | 21 | 9 | 91 | 1.42 | 1054 | 15.1 | 15915 | 48.6 | 51224 | 10 | 1.00 | 1.20 | 0.76 | 0.59 | - | - | o | PRESENT INVENTION EX. |
| 16 | H | 0.62 | 2.75 | 65 | 31 | 4 | 96 | 1.28 | 1028 | 14.8 | 15214 | 49.2 | 50578 | 10 | 0.50 | 1.40 | 0.81 | 0.51 | - | - | o | <>PRESENT INVENTION EX. |
| 17 | I | 0.94 | 2.24 | 61 | 39 | 0 | 100 | 0.84 | 995 | 16.2 | 16119 | 63.1 | 62785 | 9 | 0.75 | 1.30 | 0.80 | 0.58 | - | - | o | PRESENT INVENTION EX. |
| 18 | I | 0.94 | 2.24 | 65 | 28 | 7 | 93 | 1.36 | 1047 | 15.3 | 16019 | 44.7 | 46801 | 11 | 0.72 | 1.30 | 0.77 | 0.58 | - | - | o | PRESENT INVENTION EX. |
| 19 | J | 1.13 | 2.25 | 71 | 28 | 1 | 99 | 0.65 | 1036 | 15.7 | 16265 | 65.3 | 67651 | - | - | - | - | - | 0.20 | 0.30 | o | PRESENT INVENTION EX. |
| 20 | K | 1.45 | 2.57 | 83 | 16 | 1 | 99 | 0.72 | 864 | 20.5 | 17712 | 72.8 | 62899 | 12 | 1.02 | 1.31 | 0.70 | 0.51 | - | - | o | PRESENT INVENTION EX. |
| 21 | L | 0.76 | 1.92 | 76 | 18 | 6 | 94 | 1.22 | 841 | 18.9 | 15895 | 60.1 | 50544 | 11 | 0.60 | 1.10 | 0.79 | 0.57 | 0.10 | 0.40 | o | <>PRESENT INVENTION EX. |
| 22 | M | 1.22 | 2.92 | 52 | 46 | 2 | 98 | 1.05 | 1235 | 12.3 | 15191 | 48.3 | 59651 | - | - | - | - | - | - | - | o | PRESENT INVENTION EX. |
| 23 | N | 1.95 | 2.07 | 56 | 36 | 8 | 92 | 1.26 | 1001 | 17.6 | 17618 | 52.1 | 52152 | 9 | 1.50 | 1.20 | 0.77 | 0.58 | - | - | o | PRESENT INVENTION EX. |
| 24 | O | 0.96 | 2.16 | 69 | 27 | 4 | 96 | 1.14 | 824 | 21.3 | 17551 | 71.6 | 58998 | 10 | 0.70 | 1.20 | 0.73 | 0.56 | - | - | o | PRESENT INVENTION EX. |
| 25 | P | 1.34 | 2.91 | 68 | 25 | 7 | 93 | 1.43 | 982 | 16.1 | 15810 | 46.5 | 45663 | 11 | 1.05 | 1.60 | 0.78 | 0.55 | - | - | o | PRESENT INVENTION EX. |
| 26 | Q | 1.42 | 3.22 | 87 | 9 | 3 | 96 | 1.55 | 601 | 23.5 | 14124 | 70.4 | 42310 | 11 | 1.10 | 1.80 | 0.77 | 0.56 | - | - | o | COMP. EX. |
| 27 | R | 0.52 | 2.63 | 72 | 26 | 2 | 98 | 1.86 | 820 | 17.4 | 14268 | 48.7 | 39934 | 12 | 0.40 | 1.40 | 0.77 | 0.53 | - | - | o | COMP. EX. |
| 28 | S | 0.82 | 3.61 | 67 | 30 | 3 | 97 | 2.01 | 1046 | 13.2 | 13807 | 35.4 | 37028 | 10 | 0.70 | 2.00 | 0.65 | 0.55 | - | - | o | COMP. EX. |
| 29 | T | 1.24 | 0.44 | 75 | 14 | 2 | 89 | 1.96 | 492 | 29.7 | 14612 | 72.5 | 35670 | 8 | 0.95 | 0.75 | 0.77 | 0.57 | - | - | o | COMP. EX. |

UNDER LINE PORTION: CONDITION OUT OF THE PRESENT INVENTION

* EX. : EXAMPLE / COMP. : COMPARATIVE

<REFERENCE>

As apparent from the above results, when the requirements defined by the present invention are satisfied, a high-strength galvanized steel sheet having excellent formability in which the tensile strength is 780 MPa or more, the product of the tensile strength and the total elongation is 15,000 MPa·% or more, and the product of the tensile strength and the hole expansion rate is 45,000 MPa·% or more can be manufactured. In addition, when the requirements defined in Claim 3 or 4 are satisfied, the anti-powdering property is superior.

Industrial Applicability

A high-strength galvanized steel sheet of the present invention can be used, for example, in automobile and electrical industrial fields, as a high-strength galvanized steel sheet which is used for parts required to satisfy the reduction in thickness and to have the corrosion resistance. A method for manufacturing a high-strength galvanized steel sheet of the present invention can be used as a method for manufacturing the above high-strength galvanized steel sheet.

**Claims**

1. A high-strength cold-rolled galvanized steel sheet having excellent formability, consisting of, as a chemical component of steel on a mass percent basis: 0.05% to 0.30% of C; 0.80% to 2.0% of Si; 0.50% to 3.50% of Mn; 0.003% to 0.100% of P; 0.010% or less of S; 0.010% to 0.06% of Al; 0.007% or less of N, and further optionally comprising at least one of 0.005% to 2.00% of Cr, 0.005% to 2.00% of V, 0.005% to 2.00% of Mo, 0.005% to 2.00% of Ni, and 0.005% to 2.00% of Cu on a mass percent basis, and further optionally comprising at least one of 0.01% to 0.20% of Ti and 0.01% to 0.10% of Nb on a mass percent basis, and further optionally comprising 0.0002% to 0.005% of B on a mass percent basis, and further optionally comprising at least one of 0.001% to 0.005% of Ca and 0.001% to 0.005% of REM on a mass percent basis; and the balance being Fe and inevitable impurities, wherein in the microstructure of the steel sheet, ferrite has an area fraction of 20% or more, tempered martensite, tempered bainite, and bainite have a total area fraction of 10% or more, ferrite, tempered martensite, tempered bainite, and bainite have a total area fraction of 90% or more, and wherein in the microstructure of the steel sheet, the standard deviation of nano-hardness, measured at a depth of one fourth of the thickness of the steel sheet, is 1.50 GPa or less.

2. The high-strength cold-rolled galvanized steel sheet having excellent foemability, according to claim 1, wherein in the structure of the steel sheet, the total area fraction of retained austenite and martensite is 5% or less.

3. The high-strength cold-rolled galvanized steel sheet having excellent formability, according to one of claims 1 or 2, wherein the average solid-solved Si amount and the average solid-solved Mn amount in a base steel surface layer portion, which is in a region from a plating/base steel interface to a depth of 0.5 $\mu$m therefrom, are each 0.5 mass percent or less. L

4. The high-strength cold-rolled galvanized steel sheet having excellent formability, according to one of claims 1 or 2, wherein the high-strength galvanized steel sheet is a high-strength galvanized steel sheet having a plating layer containing 7% to 15% of Fe, and as for the average solid-solved Si amount and the average solid-solved Mn amount in a base steel surface layer portion, which is in a region from a plating/base steel interface to a depth of 0.5 $\mu$m therefrom, the average solid-solved Si amount is 70% to 90% of a Si amount of an average parent material composition, and the average solid-solved Mn amount is 50% to 90% of an Mn amount of the average parent material composition.

5. A method for manufacturing a high-strength cold-rolled galvanized steel sheet having excellent formability, wherein after a slab having components described in any one of claims 1 to 4 is hot-rolled and cold-rolled, annealing is performed in a continuous galvanizing line having a heating zone of a direct-firing furnace type or a non-oxidizing furnace type, heating is performed in the heating zone at an average heating rate of 10°C/sec or more from 400°C to a heating-zone outlet-side temperature so that the heating-zone outlet-side temperature is 600°C or more; then in a reducing zone, heating is performed at an average heating rate of 0.1 to 10°C/sec to a maximum reaching temperature of 750°C or more and is held for 30 seconds or more; subsequently, cooling is performed from 750°C to 350°C or less at an average cooling rate of 10°C/sec or more; then heating is performed to 350°C to 700°C and is held for 1 second or more; and subsequently, hot-dip galvanizing is performed, or after the hot-dip galvanizing, an alloying treatment is further performed by heating to a temperature of 490 to 550°C.

**Patentansprüche**

1. Hochfestes kaltgewalztes verzinktes Stahlblech mit hervorragender Formbarkeit, dessen chemische Stahlkomponenten auf Masseprozentbasis wie folgt zusammengesetzt sind: 0,05% bis 0,30% C; 0,80% bis 2,0% Si; 0,50% bis 3,50% Mn; 0,003% bis 0,100% P; 0,010% oder weniger S; 0,010% bis 0,06% Al; 0,007% oder weniger N und zudem gegebenenfalls mindestens ein Element umfasst von 0,005% bis 2,00% Cr, 0,005% bis 2,00% V, 0,005% bis 2,00% Mo, 0,005% bis 2,00% Ni, und 0,005% bis 2,00% Cu auf Masseprozentbasis; und zudem gegebenenfalls mindestens ein Element umfasst von 0,01% bis 0,20% Ti und 0,01% bis 0,10% Nb auf Masseprozentbasis und zudem gegebenenfalls umfasst 0,0002% bis 0,005% B auf Masseprozentbasis, und zudem gegebenenfalls mindestens ein Element umfasst von 0,001% bis 0,005% Ca und 0,001% bis 0,005% REM auf Masseprozentbasis; und als Rest Fe und unvermeidbare Verunreinigungen, wobei in der Mikrostruktur des Stahlblechs Ferrit einen Flächenanteil von 20% oder mehr ausmacht, getempertes Martensit, getempertes Bainit und Bainit einen Gesamtflächenanteil von 10% oder mehr ausmachen, Ferrit, getempertes Martensit, getempertes Bainit und Bainit einen Gesamtflächenanteil von 90% oder mehr ausmachen, und wobei in der Mikrostruktur des Stahlblechs die Standardabweichung der Nanohärte, gemessen in einer Tiefe von einem Viertel der Dicke des Stahlblechs, 1,50 GPa oder weniger ist.

2. Hochfestes kaltgewalztes verzinktes Stahlblech mit hervorragender Formbarkeit nach Anspruch 1, wobei der Gesamtflächenanteil von Restaustenit und -martensit in der Struktur des Stahlblechs 5% oder weniger ist.

3. Hochfestes kaltgewalztes verzinktes Stahlblech mit hervorragender Formbarkeit nach einem der Ansprüche 1 oder 2, wobei die durchschnittliche Si-Mischkristall-Menge und die durchschnittliche Mn-Mischkristall-Menge in einem Teil der Basisstahloberflächenschicht, der sich in einer Grenzflächenregion zwischen Metallüberzug und Basisstahl bis zu 0,5 $\mu$m Tiefe davon ausgehend befindet, jeweils 0,5 Masseprozent oder weniger ausmachen.

4. Hochfestes kaltgewalztes verzinktes Stahlblech mit hervorragender Formbarkeit nach einem der Ansprüche 1 oder 2, wobei das hochfeste verzinkte Stahlblech eine Metallüberzugsschicht aufweist, die 7% bis 15% Fe aufweist, und für die durchschnittliche Si-Mischkristall-Menge und die durchschnittliche Mn-Mischkristall-Menge in einem Teil der Basisstahloberflächenschicht, die sich in einer Grenzflächenregion zwischen Metallüberzug und Basisstahl bis zu 0,5 $\mu$m Tiefe davon ausgehend befindet, die durchschnittliche Si-Mischkristall-Menge 70% bis 90% einer Si-Menge einer durchschnittlichen Ausgangs-Zusammensetzung ausmacht, und die durchschnittliche Mn-Mischkristall-Menge 50% bis 90% einer Mn-Menge der durchschnittlichen Ausgangsmaterial-Zusammensetzung ausmacht.

5. Verfahren zur Herstellung eines hochfesten kaltgewalzten verzinkten Stahlblechs mit hervorragender Formbarkeit, wobei nach Warmwalzen und Kaltwalzen einer Platte mit den in einem der Ansprüche 1 bis 4 beschriebenen Komponenten, ein Härten in einer durchgehenden Verzinkungsstrecke mit einer Heizzone eines Direktbefeuerungsofens oder oxidationsfreien Ofens erfolgt, ein Erwärmen in der Heizzone mit einer durchschnittlichen Heizgeschwindigkeit von 10°C/sec oder mehr von 400°C bis zu einer Temperatur an der Auslassseite der Heizzone erfolgt, so dass die Temperatur an der Auslassseite der Heizzone 600°C oder mehr beträgt; dann in einer Reduktionszone ein Erwärmen bei einer durchschnittlichen Heizgeschwindigkeit von 0,1 bis 10°C/sec bis zu einer maximal erreichbaren Temperatur von 750°C oder mehr erfolgt und 30 sec oder mehr gehalten wird; anschließend ein Kühlen von 750°C bis 350°C oder weniger bei einer durchschnittlichen Kühlgeschwindigkeit von 10°C/sec oder mehr erfolgt; dann ein Heizen bei 350°C bis 700°C erfolgt und für 1 sec oder mehr gehalten wird, und anschließend ein Feuerverzinken erfolgt, oder nach dem Feuerverzinken zudem eine Legierungsbehandlung durch Erwärmen auf eine Temperatur von 490 bis 550°C erfolgt.

**Revendications**

1. Tôle d'acier galvanisé à froid, de résistance élevée, ayant une excellente aptitude au façonnage, consistant en, comme composant chimique d'acier sur une base de pour cent en masse : 0,05 % à 0,30% de C : 0,80% à 2,0% de Si ; 0,50% à 3,50% de Mn ; 0,003% à 0,100% de P ; 0,010% ou moins de S ; 0,010% à 0,06% de Al ; 0,007% ou moins de N, et comprenant en outre en option au moins un de 0,005% à 2,00% de Cr, 0,005% à 2,00% de V, 0,005% à 2,00% de Mo, 0,005% à 2,00% de Ni, et 0,005% à 2,00% de Cu sur une base de pour cent en masse, et comprenant en outre en option au moins un de 0,01% à 0,20% de Ti et 0,01% à 0,10% de Nb sur une base de pour cent en masse, et comprenant en outre en option 0,0002% à 0,005% de B sur une base de pour cent en masse, et comprenant en outre en option au moins un de 0,001% à 0,005% de Ca et 0,001% à 0,005% de REM sur une base de pour cent en masse ; et le reste étant du Fe et des impuretés inévitables, où dans la microstructure de la tôle d'acier, la ferrite a une fraction d'aire de 20% ou plus, la martensite revenue, la bainite revenue, et la bainite ayant une fraction d'aire totale de 10% ou plus, la ferrite, la martensite revenue, la bainite revenue et la bainite ont une fraction d'aire totale de 90% ou plus, et où dans la microstructure de la tôle d'acier, l'écart standard de la nano-dureté, mesuré à une profondeur d'un quart de l'épaisseur de la tôle d'acier, est de 1,50 GPa ou moins.

2. Tôle d'acier galvanisé à froid, de résistance élevée, ayant une excellente aptitude au façonnage selon la revendication 1, dans laquelle, dans la structure de la tôle d'acier, la fraction d'aire totale de l'austénite et martensite retenue est de 5% ou moins.

3. Tôle d'acier galvanisé à froid, de résistance élevée, ayant une excellente aptitude au façonnage selon l'une des revendications 1 ou 2, dans laquelle la quantité de Si moyenne solide résolue et la quantité de Mn moyenne solide résolue dans une portion de couche de surface d'acier de base, qui est dans une région d'une interface de plaquage/acier de base à une profondeur de 0,5 $\mu$ de celle-ci, sont chacune de 0,5 pour cent en masse ou moins.

4. Tôle d'acier galvanisé à froid, de résistance élevée, ayant une excellente aptitude au façonnage selon l'une des revendications 1 ou 2, dans laquelle la tôle d'acier galvanisée de haute résistance est une tôle d'acier galvanisée de haute résistance ayant une couche de plaquage contenant 7% à 15% de Fe, et quant à la quantité de Si moyenne solide résolue et la quantité de Mn moyenne solide résolue dans une portion de couche de surface d'acier de base, qui se situe dans une région d'une interface de plaquage/acier de base à une profondeur de 0,5 $\mu$m de celle-ci, la quantité de Si moyenne solide résolue est de 70% à 90% d'une quantité de Si d'une composition de matériau parent moyenne, et la quantité de Mn moyenne solide résolue est de 50% à 90% d'une quantité de Mn de la composition de matériau parent moyenne.

5. Procédé de fabrication d'une tôle d'acier galvanisée à froid d'une résistance élevée ayant une excellente aptitude au façonnage, dans lequel, après qu'une brame ayant des composants décrits dans une quelconque des revendications 1 à 4 a été laminée à chaud et laminée à froid, un recuit est exécuté dans une ligne de galvanisation continue ayant une zone de chauffage d'un type de four à chauffe directe ou un type de four non-oxydant, le chauffage est exécuté dans la zone de chauffage à un taux de chauffage moyen de 10°C/sec ou plus de 400°C à une température côté sortie de la zone de chauffage de sorte que la température côté sortie de la zone de chauffage est de 600°C ou plus ; ensuite, dans une zone de réduction, le chauffage est exécuté à un taux de chauffage moyen de 0,1 à 10°C/sec à un maximum atteignant une température de 750°C ou plus et est maintenue pendant 30 secondes ou plus ; ensuite, le refroidissement est exécuté de 750 °C à 350 °C ou moins à un taux de refroidissement moyen de 10°C/sec ou plus ; ensuite le chauffage est exécuté à 350°C à 700°C et est maintenu pendant 1 seconde ou plus ; et ensuite, une galvanisation à chaud est exécutée, ou bien après la galvanisation à chaud, un traitement d'alliage est en outre exécuté en chauffant à une température de 490 à 550 °C.

## REFERENCES CITED IN THE DESCRIPTION

### Patent documents cited in the description

- JP 2005256089 A
- JP 2005200690 A
- JP 2005200694 A
- JP 2006299344 A
- EP 1096029 A

### Non-patent literature cited in the description

- *Proceedings of the International Workshop on the Innovative Structural Materials for Infrastructure in 21st Century,* 189